# EUROPEAN PATENT APPLICATION

(11) **EP 1 566 246 A1**
(43) Date of publication of application: **24.08.2005**
(21) Application number: 05250982.5
(22) Date of filing: 22.02.2005
(51) Int. Cl.: B25J 19/00

(54) **Robot with flexible display screen attached on robot arm**

(30) Priority: 23.02.2004 JP 2004046448
(71) Applicant: FANUC LTD, Yamanashi 401-0597 (JP)
(72) Inventor: Hashimoto, Yoshiki, Hadano-shi Kanagawa 257-0025 (JP); Chino, Nobuo R. 11-206, Fanuc Manshonharimomi, Yamanashi, 401-0511 (JP); Hiramoto, Masatoshi Fanuc Dai3virakaramatsu, Yamanashi, 401-0511 (JP)
(74) Representative: Billington, Lawrence Emlyn

(57) **Abstract**

A robot (1) with a display device (3) allowing an operator to refer to information required for inspections or the like without having to use a printed manual or a display screen of a teaching pendant. The display device (3) has a flexible display screen (31) that uses organic light-emitting diodes, a control unit (32), and a plug (33). The display device plug (33) is inserted in a connector (11) provided at a suitable location on the robot arm, the display unit (31) is lightly pressed onto the surface of the robot arm (the surface may be curved or flat) and a sticking part (an adhesive layer or magnetic layer) stuck onto and fixed to the surface. Instructions are transmitted from the teaching pendant to a robot controller. Electric power and signals are transmitted to the control unit (32) through wiring (41), and an image is displayed on the display unit (31). The technician carries on with the work of inspection while referring to the display screen (31). Alternatively, power may be supplied by battery and data exchanged by wireless communications. In addition, a holder that accepts and holds the display device may be provided on the robot arm.

## Description

### BACKGROUND OF THE INVENTION

### 1. Field of the Invention

The present invention relates to a robot provided with a display device, and in particular to a technology for displaying information regarding operation and maintenance of the robot on a robot arm.

### 2. Description of Related Art

Conventionally, a person responsible for the operation and maintenance of a robot on a factory production line or the like, in order to access information on how to operate or maintain the robot, has to either hold a printed manual or a teaching pendant and refer to the necessary information described on the printed manual or displayed on a screen of the teaching pendant. However, at times a place to put the printed manual or the teaching pendant cannot be found, which is inconvenient. In addition, having to carry the printed manual or the teaching pendant while working reduces efficiency. An effective technology for solving such a situation in a simple way has not yet been proposed.

### SUMMARY OF THE INVENTION

The present invention provides a technology for eliminating inconvenience like that occurring when a person in charge of operation and maintenance of a robot has to check a printed manual or a display screen of a teaching pendant. Moreover, the present invention thereby prevents a reduction in efficiency with which such work as operation and maintenance is carried out.

In the present invention, a display device having a flexible display screen using an organic light-emitting diode (OLED) or an organic electro-luminescence (OEL) is mounted on the robot.

According to an aspect of the present invention, a robot comprises: a robot arm; and a display device having a flexible display screen attached on the robot arm. The display device may further have a display control unit for controlling the display screen. The display control unit may be provided with wireless communications means and/or a battery. Electric power for the control unit may be supplied trough the robot.

According to another aspect of the present invention, a robot comprises: a robot arm; and a mounting portion provided on the robot arm for mounting a display device having a flexible display screen attachable on the robot arm, the mounting portion having a holder for receiving and holding the display screen of the display device.

According to still another aspect of the present invention, a robot comprises: a robot arm; and a mounting portion provided on the robot arm for mounting a display device having a flexible display screen attachable on the robot arm and a display control unit for controlling the display screen, the mounting portion having a connector for electrical connection with the display control unit.

According to the present invention, the display device having a flexible display screen is mounted on the robot, and therefore, when performing robot operation, maintenance, troubleshooting or the like, the flexible display screen can be attached on either a curved or a flat surface and used for displaying the required information. As a result, inconvenience like that occurring when having to check a printed manual or the screen of a teaching pendant (such as having no place to put the manual or teaching pendant, being unable to use one hand, and the like) can be eliminated.

In addition, providing the control unit of the display device with wireless communications means eliminates the need for wiring for transmitting and receiving control signals for display and signals expressing the display contents, and thus does not complicate the robot wiring. Power supply for the control unit can also be achieved simply, by use of a battery or by supplying power via the robot.

### BRIEF DESCRIPTION OF THE DRAWINGS

FIG. 1 is a diagram showing the general arrangement of a robot system according to one embodiment of the present invention;
FIGS. 2a and 2b are diagrams illustrating power supply as well as signal transmission and reception carried out through a connector provided on a robot, in which FIG. 2a is a schematic view showing a state before connection and FIG. 2b is an expanded sectional view of a state after connection; and
FIGS. 3a and 3b are diagrams illustrating an embodiment in which a holder provided on a robot arm holds a display device equipped with wireless communications means for transmitting and receiving signals, in which FIG. 3a is a schematic view showing a state before the display device is held and FIG. 3b is an expanded sectional view of a state after holding.

### DETAILED DESCRIPTION

Preferred embodiments of the present invention are now described in detail referring to the accompanying drawings.

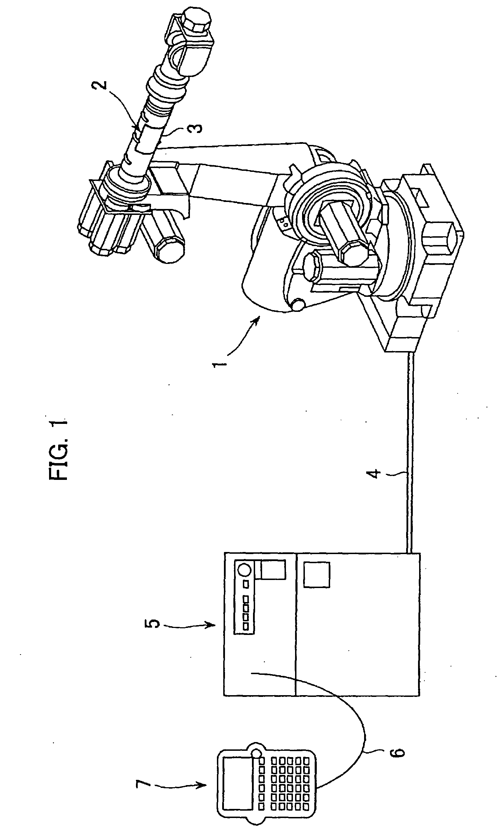

FIG. 1 is a diagram showing the general arrangement of a robot system according to one embodiment of the present invention. In FIG. 1, reference numeral 1 designates a robot (the overall mechanical portion), whose operations are controlled by a controller 5 connected to the robot by a cable 4. A teaching pendant 7 is connected to the robot controller 5 by a cable 6, so that, by operating the teaching pendant 7, the robot can be instructed and operated manually. This basic structure and function is not particularly different from the conventional robot system.

The present embodiment differs from the conventional art insofar as a mounting portion 2 is provided at a suitable location on the robot arm of the robot 1, at which a display device 3 is mounted. A device having a display screen using organic light-emitting diode (OLED) display elements is employed as the display device 3. OLED display elements are devices capable of forming a flexible planar display screen (that is, a display screen having flexibility), and are highly suitable for the wide variety of surfaces of the robot arm (flat, convex, concave, etc.). In other words, the flexible planar display screen can be easily mounted at locations at which it would be difficult to mount essentially unbendable (that is, lacking in flexibility) rigid display screens (as will be illustrated later with examples).

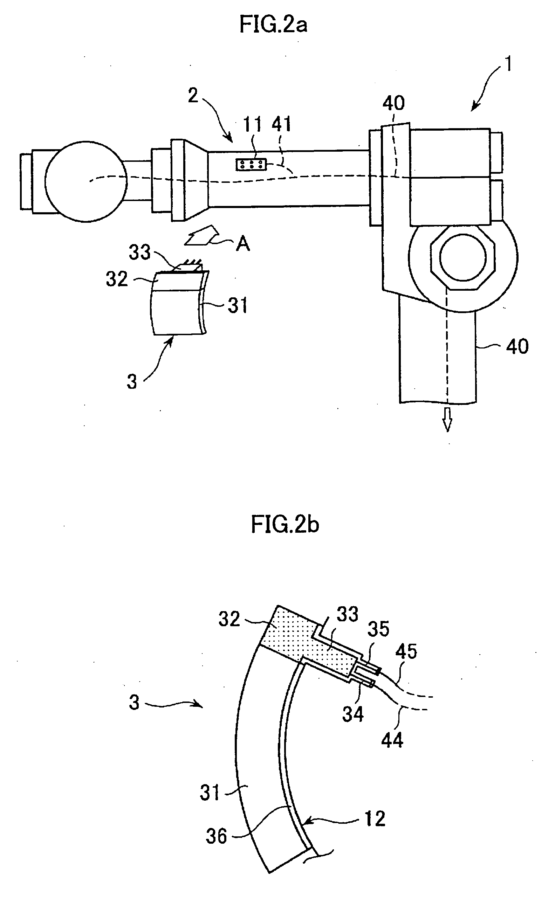

With respect to the embodiment of the mounting of the display device 3, a number of variations are possible concerning the methods for supplying power and transmitting/receiving signals, and in particular methods for fixing in place and supporting the display device and the display screen. First, it is possible to adopt a method in which power is supplied and signals transmitted and received through a connector attached to the robot 1, with the display screen stuck on and fixed to the mount (the surface of the robot arm). FIGS. 2a and 2b show an example thereof, in which FIG. 2a is a schematic view showing a state before connection and FIG. 2b is an expanded sectional view of a state after connection.

As shown in the diagrams, the display device 3 comprises a flexible display screen 31 using OLED display elements, a control unit 32 for controlling the display screen 31, and a plug 33. As shown in FIG. 2b, a sticking portion 36 used to affix the display screen 31 to a flat or curved surface is provided on the rear surface of the display screen 31. The sticking portion 36 is selected to suit the material of a surface 12 of the mounting portion, and may, for example, be an adhesive layer or a magnetic layer (for example, a layer of paint in which magnetic powder is mixed). Preferably, the strength of the sticking to the surface 12 of the mounting portion should be such as to prevent the display screen 31 from falling off yet enable a person to peel it off easily.

What should be noted here is that, because the display screen 31 is flexible, this type of affixing by sticking can be carried out easily even if the surface 12 is curved. In terms of the example shown in FIG. 2b, simply by pressing the display screen 31 onto the slightly convex surface 12, the display screen 31 can be stabilized. The operation is the same if the surface 12 is concave. If the display were not flexible, it would be difficult to fix it to a curved surface in this manner.

The tip of the plug 33 is provided with a necessary number of connector pins 34, 35 (of which two are shown in FIG. 2b). The suitable location on the robot arm (that is, the mounting portion) is provided with a connector 11 having an opening that receives the plug 33. Connector contacts are provided at the bottom of the opening for connecting power lines and signal lines 44, 45 to the connector pins 34, 35.

Wiring 40 includes multiple power lines and signal lines, including power lines and signal lines for the robot 1 drive servo motors along each axis and the encoder, with each connector contact acting as a terminal for several branch lines of the wiring 40. The contacts of the connector 11 include contacts for power supply as well as contacts for signal transmission/reception, each of which is connected through the wiring 40 to a power supply, not shown, located in side the robot controller 5 (in the case of the former) or to an input-output interface coupled to a bus line of a CPU (in the case of the latter). Turning the display device 3 ON or OFF can be accomplished by connecting or disconnecting the plug 33 to or from the connector 11, for example. Alternatively, an ON/OFF instruction may be sent to the robot controller 5 from the teaching pendant 7, thus starting/ending the supply of power to the display device 3.

The structure and function of the control unit 32 itself of the display device 3 are commonplace, and therefore a detailed description thereof shall be omitted. Suffice it here to say that a communications capability for exchanging data related to the display contents and a display driver for controlling the OLED display element with the robot controller 5 is built into the control unit 32. The display contents for the display screen 31 may, for example, be text or illustrations explaining the procedure for periodic inspection, and the data for such display contents can be stored on a non-volatile memory in the robot controller 5 in advance. An operator then carries out the following operations with respect to, for example, starting a periodic inspection:
(1) Insert the plug 33 of the display device 3 into the connector 11 (refer to arrow A shown in FIG. 2a).
(2) Lightly press the display screen 31 onto the surface 12, and stick and fix thereto.
(3) Transmit instructions from the teaching pendant 7 and display the information desired to be displayed first on the display screen 31.
(4) Carry on with the inspection while referring to the display screen.
(5) If it becomes necessary to display other information on the display screen 31, then transmit an instruction from the teaching pendant 7 to change the display screen and display the desired new information on the display screen 31.
(6) Thereafter, when steps (4) and (5) have been repeated as necessary and work completed, peel the display screen 31 off the surface 12 and remove the plug 33 from the connector 11.

It should be noted that, if the control unit 32 has the necessary capacity, a page-forward button and a page-back button may be provided and the display device 3 operated directly, so as to enable the operator to choose the display contents. Furthermore, the control unit 32 may be provided with a memory capable of storing display contents, or configured so as to be able to accommodate a ROM containing display contents (for example, a ROM containing periodic inspection data).

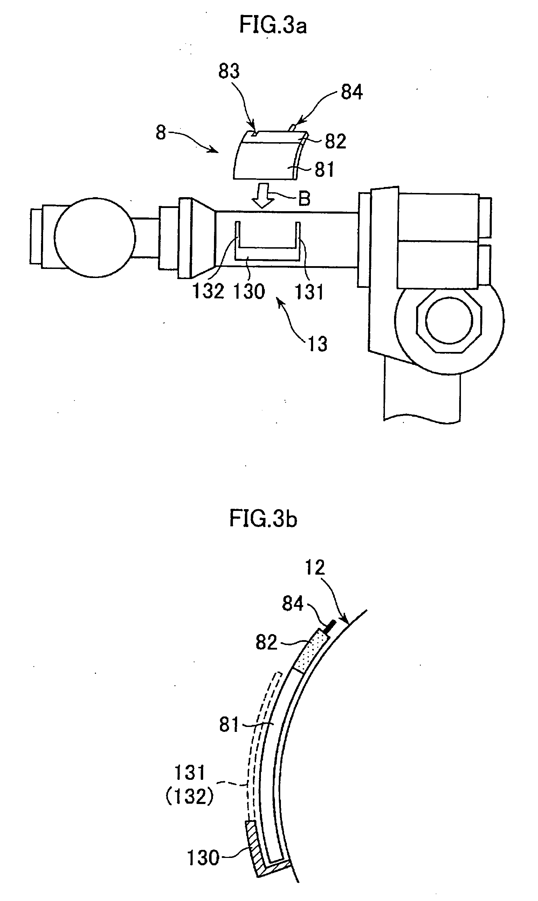

In the embodiment described above, the supply of power and the transmission and reception of signals are carried out using a connector provided on the robot, with the display screen stuck and fixed on the surface of the robot arm. Alternatively, however, with respect to power supply, it is possible to install a battery in the control unit of the display device. In addition, with respect to signal transmission and reception, it is instead possible to install ireless communications devices in the display device and the robot controller. Finally, with respect to the fixing of the display screen, it is possible to provide a holder that accepts and holds the display screen. FIGS. 3a and 3b illustrate a variation combining these alternative arrangements, in which FIG. 3 a is a schematic view showing a state before the display device is held and FIG. 3b is an expanded sectional view of a state after holding.

As shown in the diagrams, a display device 8 is comprised of a flexible display screen 81 using OLED display elements and a control unit 82 that controls the parts of the display device 8. The control unit 82 is provided with a battery accommodation part 83 that accommodates a battery for supplying power to the display device 8 and a wireless transceiver for transmitting and receiving signals to and from the robot controller 5 that is equipped with a wireless transceiver capability. The wireless transceiver has a projection for accommodating an antenna, and the projection is indicated by reference numeral 84 in FIGS. 3a and 3b. The projection 84 also functions as a handle. It should be noted that a transceiver circuit, not shown, for wireless communications is built into the control unit 82.

By contrast, a holder 13 for accepting and holding the display screen 81 of the display device 8 is provided at a suitable location on the robot arm (a mounting). The holder 13 may have a construction as simple as that of a letter holder, for example, and forms a shallow boxlike space with a front guide 130 and left and right side guides 131, 132, so that, as indicated by the arrow B, the display screen 81 is inserted therein, so as to hold the display device 8 in a state like that shown in FIG. 3b. What should be noted here is that, because the display screen 81 is flexible, even if the robot arm surface 12 at the location where the holder 13 is provided is curved, the front guide 130 and the side guides 131, 132 can be shaped to fit the curved surface (that is, shaped in the form of a bow) so as to give the holder 13 a compact construction. If the display were not flexible, the construction of the holder 13 would become complicated and its size (that is, its thickness) would also increase.

Turning the display device 8 ON and OFF is accomplished, for example, by transmitting an ON/OFF instruction to the robot controller 5 from the teaching pendant 7, with the robot controller 5 turning the display device 8 ON or OFF by wireless command. In addition, the necessary circuitry for transmitting and receiving data relating to display contents and a display driver for controlling the OLED display elements to and from the robot controller 5 by wireless communication is built into the control unit 82. As with the example described above, the display contents for the display screen 81 may, for example, be text or illustrations explaining the procedure for periodic inspection, and the data for such display contents can be stored on a non-volatile memory in the robot controller 5 in advance. An operator then carries out the following operations with respect to, for example, starting a periodic inspection:
(1) Grasp the display device 8 by the projection 84 and support the display device 8 by the holder 13 (see arrow B shown in FIG. 3a). At this time, because the display screen 81 is flexible, the operation of inserting the display screen 81 into the holder 13 can be carried out smoothly.
(2) Transmit instructions from the teaching pendant 7 and display the information desired to be displayed first on the display screen 81.
(3) Carry on with the inspection while referring to the display screen.
(4) If it becomes necessary to display other information on the display screen 81, then transmit an instruction from the teaching pendant 7 to change the display screen and display the desired new information on the display screen 81.
(5) Thereafter, when steps (3) and (4) have been repeated as necessary and work completed, transmit a power OFF instruction from the teaching pendant 7 and remove the display device 8 from the holder 13.

It should be noted that, as with the embodiment described above, if the control unit 82 has the necessary capacity, a page-forward button and a page-back button may be provided and the display device 8 operated directly, so as to turn the power ON and OFF and enable the operator to choose the display contents. Furthermore, the control unit 82 may be provided with a memory capable of storing display contents, or configured so as to be able to accommodate a ROM containing display contents (for example, a ROM on which periodic inspection data is written).

## Claims

1. A robot comprising:
a robot arm; and
a display device having a flexible display screen attached on said robot arm.

2. A robot according to claim 1, wherein the display device further has a display control unit for controlling the display screen.

3. A robot according to claim 2, wherein the display control unit is provided with wireless communications means.

4. A robot according to claim 2, wherein the display control unit is provided with a battery.

5. A robot according to claim 2, wherein electric power for the display control unit is supplied through the robot.

6. A robot comprising:
a robot arm; and
a mounting portion provided on said robot arm for mounting a display device having a flexible display screen attachable on the robot arm, said mounting portion having a holder for receiving and holding the display screen of said display device.

7. A robot comprising:
a robot arm; and
a mounting portion provided on the robot arm for mounting a display device having a flexible display screen attachable on said robot arm and a display control unit for controlling the display screen, said mounting portion having a connector for electrical connection with the display control unit.
